Europäisches Patentamt

European Patent Office

Office européen des brevets

(19)

(11) Veröffentlichungsnummer: **0 065 250**
**B1**

(12) **EUROPÄISCHE PATENTSCHRIFT**

(45) Veröffentlichungstag der Patentschrift:
**13.08.86**

(51) Int. Cl.⁴: **G 03 B  17/30**

(21) Anmeldenummer: **82104031.8**

(22) Anmeldetag: **10.05.82**

(54) **Filmspule mit Haltezapfen.**

(30) Priorität: **19.05.81  DE 3119936**

(43) Veröffentlichungstag der Anmeldung:
**24.11.82 Patentblatt 82/47**

(45) Bekanntmachung des Hinweises auf die Patenterteilung:
**13.08.86 Patentblatt 86/33**

(84) Benannte Vertragsstaaten:
**DE FR GB**

(56) Entgegenhaltungen:
**FR-A-1 567 353**
**US-A-2 477 010**
**US-A-2 911 163**
**US-A-3 361 380**

(73) Patentinhaber: **AGFA- GEVAERT Aktiengesellschaft,
D-5090 Leverkusen 1 (DE)**

(72) Erfinder: **Kluczynski, Achim, Küstriner Strasse 5,
D-5063 Overath (DE)**
Erfinder: **Altmann, Erik, Düsterweg 28, D-4330
Mülheim/Ruhr (DE)**

EP 0 065 250 B1

## Beschreibung

Die vorliegende Erfindung betrifft eine Filmspule mit Haltezapfen zur Befestigung eines gelochten Filmendes in einem Schlitz des Spulenkernes.

Es ist eine große Zahl von Spulenausführungsarten bekannt, die zum Aufwickeln verschiedenartiger Bandmaterialien dienen. Bei diesen Spulen ist das Befestigen des Bandes an den Spulen zum Aufwickeln auf die verschiedensten Arten gelöst, wie z.B. durch Umschlingen, Ankleben, Nieten, Klemmen oder Einhaken am oder in einem Schlitz im Spulenkern. Der Gegenstand der Erfindung befaßt sich mit Spulen, in die das mit Löchern versehene Filmband eingehakt wird.

Für Kleinbildfilme sind aus der DE-FS 1 272 707 Spulen bekannt, die z.B. als Doppelhakenspulen bezeichnet werden. Diese Spulen besitzen im Spulenholm einen Schlitz, in dem eingeformte Haken und separate Leitflächen angebracht sind. Das mit einem Loch versehene Filmende wird in diesen Schlitz eingeschoben, wobei die Leitflächen zu beiden Seiten der Haken den Film um den Haken solange wölben, bis das Loch im Film in den Haken einschnappt. Die Leitflächen verhindern nach dem Einschnappen des Loches in den Haken über die Filmsteifigkeit ein selbsttätiges Aushaken des Filmbandes aus der Spule.

Diese bekannte Spulenform hat den Nachteil, daß sich nur relativ geringe Zugkräfte auf die Filmbandmaterialien übertragen lassen, was häufig zur Folge hat, daß der Film aus der Spule ausreißt und damit unbrauchbar wird oder zumindest nicht mehr in die lichtsichere Patrone zurückgespult werden kann. Die weite Verbreitung von Winderkameras, das sind Kameras mit Motortransport, die den Film mit hoher Geschwindigkeit und großem Drehmoment in der Kamera fördern, verursachen häufig ein Ausreißen des Filmes aus der Verhakung in der Spule.

Die US-Patentschrifte 3 361 380 beschreibt eine Kombination Spule-Filmband, bei welcher in einem Spulenschlitz 2 Haken und im Filmband 2 Löcher zur Verbesserung der Haltekraft angebracht werden. Auch diese Spule eignet sich nur bedingt zum sicheren Befestigen des Filmes an der Spule und erhöht nur in geringem Maße die Haltekraft, mit der der Film in den Haken der Spule im Spulenschlitz gehalten werden kann, wenn eine hohe Zugkraft an dem Filmstreifen angreift.

Vor der Benutzung von Haltezapfen oder Haltehaken wurden häufig feststehende oder bewegliche Klemmvorrichtungen zum Verklemmen des Filmendes im Schlitz der Filmspule verwendet, wie sie beispielsweise aus der US-A-2 911 163 bekannt sind. Diese Art von Vorrichtungen, vor allen Dingen diejenigen, die sich federnder beweglicher Pendel bedienten, zeigten jedoch den Nachteil, daß die Herstellung verhältnismäßig umständlich und daher teuer war. Zudem bestand keine hinreichende Sicherheit gegen Herausrutschen des Filmes aus der Verklemmung, da sich die Verklemmung durch Erschütterungen oder Fallen der Spule leicht lösen konnte und das Filmende dann frei aus der Spule rutschte. Dies war häufig bei glatten Filmoberflächen der Fall, bei denen das Pendel auf der Oberfläche rutschte und diese nicht klemmend fassen konnte. Das Einfädeln eines Filmendes gegen das mit Federkraft angedrückte Pendel bereitete zudem Schwierigkeiten und eignete sich nicht für eine maschinelle Konfektionierung.

Der Erfindung liegt daher die Aufgabe zugrunde eine Befestigungseinrichtung der eingangs genannten Art zu schaffen mit der es auf einfache Weise möglich ist, ein Filmende gegen ein Ausfädeln gesichert in einer Spule so zu befestigen, daß die Befestigung einer großen Zugkraft widersteht und das Filmende leicht einfädelbar ist.

Ausgehend von Befestigungsvorrichtungen der einleitend genannten Arten ist die Aufgabe erfindungsgemäß dadurch gelöst, daß in dem Schlitz des Spulenkernes eine Klemmplatte parallel zur Längsachse der Spule unter einem Winkel $\alpha > 0$ zur Senkrechten auf die achsparallelen Seitenwände des Schlitzes angeordnet und um eine zur Spulenlängsachse parallele Achse schwenkbar gelagert ist, und die Klemmplatte zum Einhaken des gelochten Filmendes an ihrer freien Längskante mit mindestens einem bei Bewegung der Klemmplatte in einer Nut der entsprechenden Seitenwand des Schlitzes bewegbaren Haltezapfen versehen ist, wobei die Klemmplatte bei auftretender Zugbeanspruchung in eine Stellung geschwenkt wird, in der ihre freie Längskante den nicht gelochten Teil des Filmendes mit der Seitenwand des Schlitzes verklemmt.

Durch diese erfindungsgemäße Befestigungsvorrichtung werden in überraschend einfacher Weise die wesentlichen Probleme der Aufgabe gelöst, nämlich eine gegen ein Ausfädeln sichere Verhakung des Filmendes in dem Schlitz der Filmspule, eine leichte Einfädelbarkeit, die sich maschinell durchführen läßt, und eine hohe Haltekraft bei auftretender Zugbeanspruchung durch die Klemmplatte, die von dem in ein Loch im Filmende eingreifenden Haltezapfen aktiviert und in eine Stellung geschwenkt wird, in der sie den nichtgelochten Teil des Filmendes über die gesamte Breite fest mit der Spule verklemmt.

Für die Haltekraft ist hierbei nicht mehr die Ausreißfestigkeit des Loches im Filmende alleine maßgebend, sondern zusätzlich die Reißfeste des Querschnittes des Filmendes. Für den Fachmann war es überraschend, daß die Zugkraft, die zum Herausreißen des Filmes aus der Spule benötigt wurde, bei der erfindungsgemäßen Spule weit höher lag als die bei einer bisher üblichen Doppelhakenspule und daß sich das Filmende trotzdem nicht mehr aus dem Haltezapfen ausfädeln ließ.

Eine spezielle Ausführungsform der Befestigungseinrichtung zeichnet sich dadurch aus, daß die Klemmplatte mit mindestens zwei Scharnieren oder Biegestäben an einer zur Achse der Spule Parallelen Fläche oder an einer der Seitenwände des Schlitzes befestigt ist und auf der den Scharnieren bzw. Biegestäben gegenüberliegenden Seite den Haltezapfen und die freie Längskante besitzt, wobei in der Klemmstellung die Längskante zu der klemmenden Fläche der Seitenwand des Schlitzes parallel ist.

Diese Befestigungseinrichtung benötigt aufgrund des langen Hebelarmes der Klemmplatte bei deren einseitiger Befestigung mit Scharnieren nur eine geringe Zugkraft am Haltezapfen, um aktiviert zu werden und die Breite des Filmendes zu verklemmen. Das Filmstreifenende wird zum Einfädeln gegen die schräggestellte Klemmplatte geschoben und rutscht sich verformend leicht zwischen den Klemmplattenhaltezapfen und der Nut im Schlitz unter den Haltezapfen. Gelangt der Haltezapfen über das Langloch des Filmendes, so springt dieser in das Loch ein, wobei sich das Filmende aufgrund der Elastizität wieder gerade legt, so daß nun ein Aushaken nicht mehr erfolgen kann. Wird ein Zug auf den Filmstreifen ausgeübt, so legt sich das Ende des Langloches gegen den Haltezapfen und überträgt den Zug auf diesen, der seinerseits die Klemmplatte gegen das Filmende preßt und dieses zwischen Klemmplatte und Schlitzfläche einklemmt. Diese Verklemmung bewirkt, daß das Filmende nicht ausreißen, sondern nur abreißen kann, wozu eine erheblich höhere Kraft erforderlich ist.

Das Filmende läßt sich in dieser Spulenausführung nur von einer Seite her in die Spule einfädeln, so daß die Spule in eine Einfädelstellung gebracht werden muß, die bei einer Drehrichtung für die Spule fast 360° betragen kann.

Eine andere vorteilhafte Ausführungsform der Befestigungseinrichtung zeichnet sich dadurch aus, daß die Klemmplatte an der den Scharnieren bzw. Biegestäben gegenüberliegenden Seite mit mehreren Haltezapfen versehen ist, die in entsprechenden in den Schlitz eingearbeiteten Nuten bewegbar sind. >erbei kann die Klemmkraft durch zum Beispiel zwei Haltezapfen, die in zwei Lochungen des Filmendes eingreifen, erhöht werden. Durch die zwei Haltezapfen wird der Filmstreifen in Wickelrichtung zentriert und kann nach dem Einfädeln nicht schräg auf die Spule auflaufen oder von der Spule gezogen werden. Die Klemmplatte wird an zwei Seiten gleichmäßig gegen den auf der Klemmfläche des Spulenschlitzes liegenden Film gezogen und klemmt diesen über die gesamte Breite gleichmäßig fest. Es sind natürlich auch mehr als zwei Haltezapfen mit einer entsprechenden Anzahl von Lochungen im Filmstreifen verwendbar, jedoch verringert sich mit der Anzahl Lochungen die klemmbare Fläche. Bei einer Vielzahl von Haltezapfen und Lochungen müssen diese sehr schmal gehalten werden, wodurch die Kerbwirkung, die die Haltezapfen auf das Filmmaterial am Rande der Lochungen ausüben, sehr hoch und damit die Gefahr des Einreißens erhöht wird.

Eine weitere Ausführungsform der Befestigungseinrichtung zeichnet sich dadurch aus, daß die Klemmplatte um die Achse der Spule drehbar ist und jede ihrer freien Längskanten Haltezapfen und Klemmkanten besitzt, wobei die Haltezapfen in in die beiden Längsflächen des Schlitzes eingearbeiteten Nuten bewegbar und die Klemmkanten der Klemmplatte mit den klemmenden Flächen der Seitenflächen des Schlitzes parallel sind.

Dies Ausführungsform hat den Vorteil, daß das Filmende von beiden Seiten in den Spulenschlitz einführbar ist und die Spule in eine Einfädelstellung von nur 180 gebracht werden muß. Wegen des kleineren Hebelarmes der Klemmplatte ist die Zugkraft zum Aktivieren der Klemmkraft größer, so daß es bei dieser Ausführung von Vorteil sein kann, wenn die Klemmplatte auf jeder ihrer drehbaren Längsseiten mehrere Haltezapfen besitzt, die in den in die Schlitze eingearbeiteten Nuten bewegbar sind.

Zur drehbaren Lagerung der Klemmplatte um eine Längsachse können Torsionsstäbe vorgesehen sein, die zur Spulenmitte hin verlängert und innerhalb der Klemmplatte befestigt sind.

Der Anstellwinkel der Klemmplatte zu den achsparallelen Flächen des Schlitzes ist von der Ausbildung der Scharniere oder der Torsionsachsen der Klemmplatte abhängig. Der Winkel $\alpha$ kann 5° bis 45° betragen. In einer bevorzugten Ausführungsform beträgt der Winkel 10 bis 25.

Um ein Filmende durch das Kassettenmaul einer geschlossenen Filmkassette in die Spule einfädeln zu können, ist es von Vorteil, wenn die Filmspule an einem außerhalb der Kassette liegenden Teil mit mindestens einem Kennzeichen versehen ist, das die Stellung des Einfädelschlitzes anzeigt.

Die Spule mit der beschriebenen Befestigungseinrichtung kann sehr wirtschaftlich aus Kunststoff als ein Spritzteil hergestellt werden, wobei die Klemmplatte mit ihrer Befestigung im Schlitz mit der Spule zusammen gespritzt wird. Die Klemmplatte kann gesondert gefertigt werden, wird aber in vorteilhafter Weise beim Herstellen der Spule in den Schlitz eingespritzt.

Die Funktion der Befestigungseinrichtung ist sicher, so daß die Spule mehrfach verwendet werden kann, ohne daß irgendwelche Störungen auftreten. Diese Sicherheit der Befestigungseinrichtung wird dadurch erreicht, daß die Klemmkraft zum Verklemmen des Filmendes in dem Spulenschlitz erst durch Zug am Film aktiviert wird und mit anwachsender Zugkraft überproportional ansteigt. Dieser Vorgang ist beliebig oft wiederholbar. Auch wenn die Klemmkraft sich gelockert hat, wird sie bei erneutem Zug wieder aktiviert. Im folgenden werden Ausführungsformen der Erfindung näher beschrieben. Ez zeigt:

Fig. 1 eine Filmspule mit einer Klemmplatte, die an Scharnieren befestigt ist,

Fig. 2 die Filmspule nach Fig. 1 im Schnitt entlang der Linie AB,

Fig. 3 eine Filmspule mit einer Klemmplatte, die um die Spulenahse drehbar ist,

Fig. 4 die Filmspule nach Fig. 3 im Schnitt entlang der Linie CD

Fig. 5 eine Filmspule nach Fig. 1 mit zwei Haltezapfen

Fig. 6 ein Filmende mit einem Langloch zum Einhaken in Spulen gemäß Fig. 1 und 3

Fig. 7 ein Filmende mit zwei Längslöchern zum Einhaken in eine Spule gemäß Fig. 5.

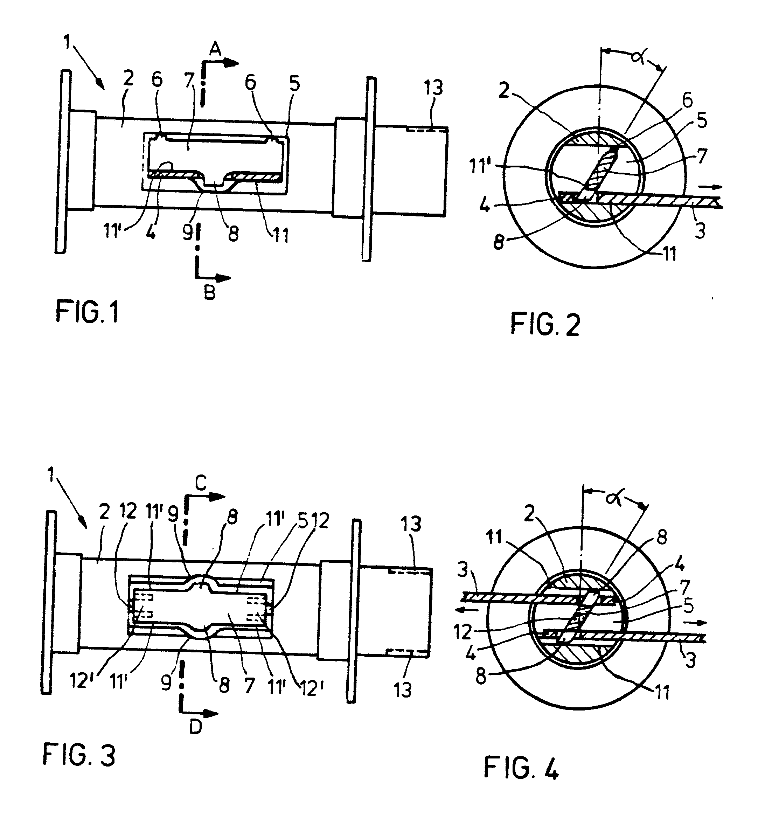

In Fig. 1 ist eine Filmspule 1 Filmspule dargestellt, die in üblicher Weise aus einem Spulenkern 2 mit zwei Flanschen besteht und auf der einen Seiten einen Spulenkopf besitzt, der bei einem fertig konfektionierten Film aus der Patrone herausragt. Auf die Spule 1 wird ein Filmstreifen 3 aufgewickelt, der mit seinem Ende 4 an der Spule befestigt wird, um den Filmstreifen 3 nach der Belichtung in einer Kamera wieder auf die Spule in der lichtsicheren Patrone zurückwickeln zu können.

In dem Schlitz 5 des Spulenholmes 2 ist mit mindestens zwei Scharnieren oder Biegestäben 6 eine Klemmplatte 7 bewegbar befestigt. Die Klemmplatte 7 trägt an der den Scharnieren 6 gegenüberliegenden, bewegbaren Seite einen Haltezapfen 8, der in einer Nut 9 des Spulenschlitzes 5 bewegbar ist, und Klemmkanten 11'.

Fig. 2 zeigt einen Schnitt durch die Spule 1 der Fig. 1 längs der Linie AB. Das Schnittbild zeigt den geschnittenen Spulenkern 2 und die mit Scharnieren 6 daran befestigte Klemmplatte 7. Die Klemmplatte 7 ist unter einem Winkel α zur Senkrechten auf die parallelen Flächen des Schlitzes 5 im Spulenholm 2 angeordnet. Dies hat spritztechnische Vorteile bei der Herstellung der Spule 1 in einem Spritzwerkzeug, ist aber auch erforderlich, um ein Verklemmen des Filmendes 4 zu ermöglichen, und erleichtert das Einfädeln des Filmendes 4 in die Spule 1.

Der Winkel α beträgt hier etwa 25°, kann aber auch größer oder kleiner gewählt werden, z.B. bei stabilen Scharnieren 5° bis 10° oder bei leichteren Scharnieren 10° bis 30°.

Der Filmstreifen 3 wird mit seinem Ende 4 zum Einfädeln gegen die Klemmplatte 7 geschoben, biegt die Klemmplatte 7 etwas in Richtung des Einfädelns und rutscht zwischen dem Haltezapfen 8 und der Nut 9 durch, wobei das Filmende 4 wellenförmig verformt wird.

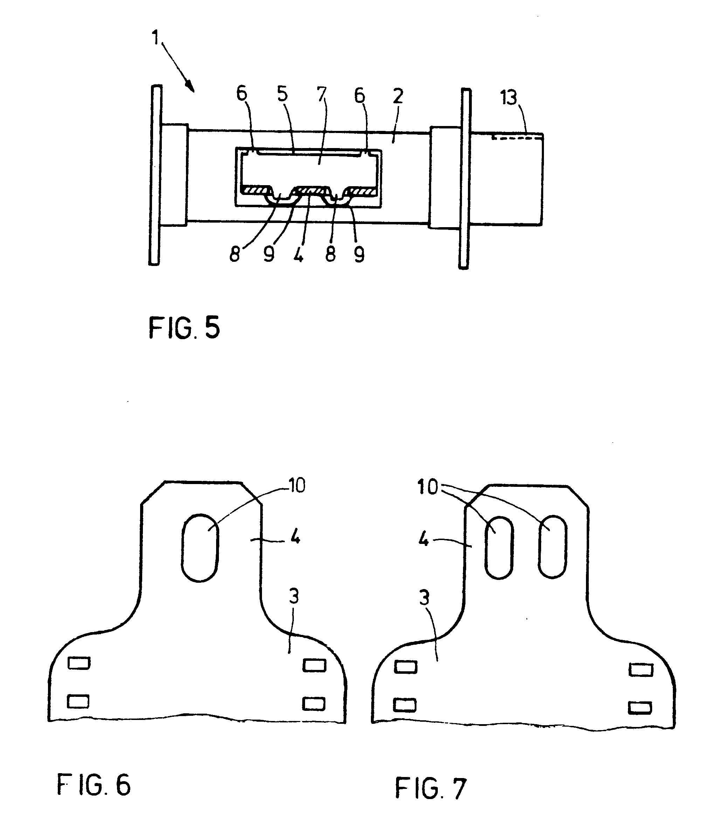

Im Filmende 4 ist ein Langloch 10 eingestanzt (Fig. 6). Sobald der Haltezapfen 8 über das Langloch 10 gelangt, springt er in das Langloch 10 ein, wobei sich das elastische Filmende 4 wieder gerade legt und sich nicht mehr ohne zusätzliche Hilfsmittel ausfädeln läßt. Der Einfädelvorgang ist somit beendet und das Filmende 4 in der Spule 1 verhakt.

Wird auf den Film 3 eine Zugkraft (Pfeil) ausgeübt, so legt sich das Langloch 10 an den Haltezapfen 8 an und überträgt die Zugkraft auf diesen. Unter der Zugkraft wird die Klemmkante 11'der Klemmplatte 7 auf die Flächen des Filmendes 4 neben dem Langloch 10 gepreßt und klemmt das Filmbandende 4 gegen die Klemmflächen 11 des Schlitzes 5. Die so aktivierte Klemmkraft nimmt überproportional mit zunehmender Zugkraft zu, so daß ein Ausreißen des Langloches 10 nicht stattfindet, sondern eine Trennung des Filmendes von der Spule nur durch Reißen des Querschnittes des Filmbandes erfolgen kann.

Für ein Reißen eines Filmbandes 3 ist aber eine erheblich höhere Kraft erforderlich als für das Ausreißen eines Langloches 10, bei dem die Einreißfeste eine zusätzliche Rolle spielt, die beim geklemmten Filmband nicht auftritt. Wie Versuche zeigen, liegt die Haltekraft einer eingangs beschriebenen Doppelhakenspule zwischen 3,5 und 5 Kp. Die Werte variieren je nach der Aus- und Weitereißfestigkeit des verwendeten Filmmateriales. Die ISO-Norm fordert eine Mindesthaltekraft zwischen Film und Spule von 4 Kp. Die Zugfestigkeit des Filmendabschnittes beträgt bei den üblichen Filmsorten zwischen 11 und 16 Kp. Die Haltekräfte der beschriebenen Befestigungseinrichtung liegen zwischen 7 und 11 Kp und betragen somit das Doppelte der bekannten Doppelhakenspule und liegen weit über dem von der ISO-Norm vorgeschriebenen Wert von 4 Kp Mindesthaltekraft.

Eine ebenso vorteilhafte Ausführungsform der Befestigungseinrichtung ist in Fig. 3 gestellt. In dem Spulenschlitz 5 ist eine Klemmplatte 7 drehbar an zwei Torsionsstäben 12 befestigt und kann um die Achse der Spule 1 bewegt werden. Die Klemmplatte ist an den beiden Außenkanten mit je einem Haltezapfen 8 und Klemmkanten 11'versehen. Die Haltezapfen 8 sind in den Nuten 9 frei drehbar, die in den Schlitz 5 des Spulenholmes 2 eingearbeitet sind.

In Fig. 4 ist ein Schnittbild entlang der Linie CD der Fig. 3 dargestellt. Die Klemmplatte 7 ist unter einem Winkel α in dem Spulenschlitz 5 angeordnet und mittels Torsionsstäbe 12 beidseitig um die Spulenachse drehbar gelagert. Das Filmende 4 des Filmstreifens 3 kann bei dieser Anordnung in vorteilhafter Weise von beiden Seiten in den Spulenschlitz 5 eingeführt werden, verformt sich hierbei und springt in den Haltezapfen 8, wonach es sich wieder plan legt. Bei Zug an dem Filmstreifen 3 (Pfeile) wird das Filmende 4 zwischen der Klemmplatte 7 und der Klemmfläche 11 verklemmt und auf Reißfeste beansprucht.

Aufgrund des kürzeren Hebelarmes der Klemmplatte 7 und der elastischen Verformung der Torsionsstäbe 12, die etwas ausweichen können, ist zur Aktivierung einer gleichgroßen Klemmkraft wie bei der in Fig. 1 dargestellten Ausführungsform eine größere Zugkraft auf den Haltezapfen erforderlich. Praktisch spielt dies keine Rolle. Es können aber zur Verringerung des Ausweichens stärkere Torsionsstäbe 12 oder statt eines Torsionsstabes 12 zwei nebeneinanderliegende Torsionsstäbe 12 verwendet werden (nicht dargestellt). Um ein leichteres Drehen der Klemmplatte 7 zu erhalten, können die Torsionsstäbe 12 zur Spulenmitte hin verlängert und in einer Aussparung der Klemmplatte 7 befestigt gu werden. Diese verlängerten Torsionsstäbe 12' sind gestrichelt in Fig. 3 eingezeichnet.

In Fig. 5 ist eine Ausführungsform der Befestigungseinrichtung im Schlitz 5 der Spule 1 dargestellt, bei der die Klemmplatte 7 der Fig. 1 insofern abgeändert wurde, als statt eines Haltezapfens 8 zwei Haltezapfen 8 angeordnet wurden. Die Haltezapfen 8 sind in Nuten 9, die in den Schlitz 5 eingearbeitet sind, frei bewegbar. Das Filmende 4 ist für diese Ausführungsform mit zwei Langlöchern 10 (Fig. 7) versehen und wellt sich beim Einfädeln in den Spulenschlitz 5 zwischen den Haltezapfen 8 undden Nuten 9 zweimal, bis die Haltezapfen 8 in die Langlöcher 10 einspringen und sich das Filmende 4 glattlegt. Diese Ausführungsform hat den Vorteil, daß die Klemmplatte parallel an zwei Stellen gleichzeitig aktiviert wird, wodurch die Zugkraft zur Aktivierung gleichmäßiger vom Film 3 auf die Klemmplatte 7 übertragen wird.

Wie oben beschrieben können auch mehr als zwei Haltezapfen 8 an der Klemmplatte 7 angebracht werden, die in einer entsprechenden Zahl von Nuten 9 frei bewegbar sind und mit Filmenden 4 zusammenarbeiten, die eine entsprechende Anzahl Langlöcher 10 besitzen (nicht dargestellt).

Die in Fig. 5 gezeigte Anordnung mehrerer Haltezapfen 8 ist ebenso bei der Ausfürung der Befestigungseinrichtung nach Fig. 3 und Fig. 4 anwendbar, wobei dann die Klemmplatte 7 an beiden Längskanten mit mehreren Haltezapfen 8 versehen ist.

Die Fig. 6 und Fig. 7 zeigen die Filmstreifen 3 mit den Langlöchern 10 in den Filmenden 4. Statt der Langlöcher 10 können auch Rundlöcher verwendet werden, die aber schlechter in die Haltezapfen einspringen. Die Langlöcher 10 werden möglichst schmal gehalten, und den Querschnitt des Filmendes 4 möglichst groß zu halten und die Reißfeste zu erhöhen.

Zur maschinellen Verarbeitung, aber auch beim Einfädeln des Filmendes 4 in die Spule 1 von Hand, ist die Spule an einem Teil, welcher außerhalb der lichtsicheren Patrone liegt, mit einem Kennzeichen 13 versehen, das aus einer Abflachung, Kerbe oder einem angebrachten Noppen bestehen kann und welches so angeordnet ist, daß die Stellung des Einfädelschlitzes 5 auch außerhalb der geschlossenen Kassette aotastbar oder fühlbar ist. Zum Einfädeln des Filmstreifens 3 in die Spule 1 durch das Kassettenmaul einer geschlossenen Kassette wird die Spule 1 solange gedreht, bis das Kennzeichen 13 eine bestimmte für das Einfädeln günstige Stellung erreicht hat und dann der Einfädelvorgang vollzogen. Die Spule 1 nach Fig. 1 und 5 hat hierzu ein Kennzeichen 13 und muß maximal um fast 360° gedreht werden, während die Spule 1 nach Fig. 3 zwei gegenüberliegende Kennzeichen 13 haben kann oder über den Schlüsselmitnehmer positioniert wird und so nur maximal um fast 180° gedreht werden muß, um die Einfädelstellung zu erreichen.

## Patentansprüuche

1. Filmspule mit Haltezapfen zur Befestigung eines gelochten Filmendes in einem Schlitz des Spulenkernes, dadurch gekennzeichnet, daß in dem Schlitz (5) des Spulenkernes (2) eine Klemmplatte (7) parallel zur Längsachse der Spule unter einem Winkel $\alpha > 0$ zur Senkrechten auf die achsparallelen Seitenwände des Schlitzes angeordnet und um eine zur Spulenlängsachse parallele Achse schwenkbar gelagert ist, und die Klemmplatte (7) zum Einhaken des gelochten Filmendes (4) an ihrer freien Längskante (11') mit mindestens einem bei Bewegung der Klemmplatte in einer Nut (9) der entsprechenden Seitenwand des Schlitzes (5) bewegbaren Haltezapfen (8) versehen ist, wobei die Klemmplatte (7) bei auftretender Zugbeanspruchung in eine Stellung geschwenkt wird, in der ihre freie Längskante (11') den nicht gelochten Teil des Filmendes mit der Seitenwand des Schlitzes verklemmt.

2. Filmspule nach Anspruch 1, dadurch gekennzeichnet, daß die Klemmplatte (7) mit mindestens zwei Scharnieren oder Biegestäben (6) an einer zur Achse der Spule (1) parallelen Fläche oder an einer der Seitenwände des Schlitzes (5) befestigt ist und auf der den Scharnieren bzw. Biegestäben (6) gegenüberliegenden Seite den Haltezapfen (8) und die freie Längskante (11') besitzt, wobei in der Klemmstellung die Längskante (11') zu der klemmenden Fläche (11) der Seitenwand des Schlitzes (5) parallel ist.

3. Filmspule nach Anspruch 2, dadurch gekennzeichnet, daß die Klemmplatte (7) an der den Scharnieren bzw. Biegestäben (6) gegenüberliegenden Seite mit mehreren Haltezapfen (8) versehen ist, die in entsprechenden in den Schlitz (5) eingearbeiteten Nuten (9) bewegbar sind.

4. Filmspule nach Anspruch 1, dadurch gekennzeichnet, daß die Klemmplatte (7) um die Achse der Spule (1) drehbar ist und auf jeder ihrer freien Längskanten einen Haltezapfen (8) und eine Klemmkante (11') besitzt, wobei die Haltezapfen (8) in in die beiden Seitenwände des Schlitzes (5) eingearbeiteten Nuten (9) bewegbar und in der Klemmstellung die Klemmkanten (11') der Klemmplatte (7) mit den klemmenden Flächen (11) der Seitenwände des Schlitzes parallel sind.

5. Filmspule nach Anspruch 4, dadurch gekennzeichnet, daß die Klemmplatte (7) auf jeder ihrer freien Längskanten mehrere Haltezapfen (8) besitzt, die in entsprechenden, in die Schlitze (5) eingearbeiteten Nuten (9) bewegbar sind.

6. Filmspule nach Anspruch 4, dadurch gekennzeichnet, daß zur drehbaren Lagerung der Klemmplatte (7) um eine Längsachse der Spule Torsionsstäbe (12) vorgesehen sind, die zur Spulenmitte hin verlängert und innerhalb der Klemmplatte (7) befestigt sind.

7. Filmspule nach einem der vorangehenden Ansprüche, dadurch gekennzeichnet, daß der Winkel α 5° bis 45°, vorzugsweise 10° bis 25° beträgt.

8. Filmspule nach einem der vorangehenden Ansprüche, dadurch gekennzeichnet, daß die Filmspule (1) an einem außerhalb der Patrone liegendem Teil mit mindestens einem Kennzeichen (13) versehen ist, das die Stellung des Einfädelschlitzes (5) anzeigt.

**Claims**

1. Film spool having retaining pins for fastening a perforated film end in a slot in the spool core, characterised in that, in the slot (5) of the spool core (2), a clamping plate (7) is arranged parallel to the longitudinal axis of the spool and at an angle α > 0 to the piane percendicular to the axis-parallel side walls of the slot and is mounted so as to be pivotable about an axis which is parallel to the longitudinal spool axis, and, for hooking into the perforated film end (4), the clamping plate (7) is provided along its free longitudinal edge (11') with at least one retaining pin (8) which, when the clamping plate moves, is movable in a groove (9) in the corresponding side wall of the slot (5), the clamping plate (7) being pivoted, upon the occurrence of tensile stress, into a position in which its free longitudinal edge (11') clamps the unperforated portion of the film end against the side wall of the slot.

2. Film spool according to Claim 1, characterised in that the clamping plate (7) is fastened, by means of at least two hinges or bending rods (6), to a surface parallel to the axis of the spool (1) or to one of the side walls of the slot (5) and has the retaining pin (8) and the free longitudinal edge (11') on the side opposite the hinges or bending rods (6), the longitudinal edge (11'), when in the clamping position, being parallel to the clamping surface (11) of the side wall of the slot (5).

3. Film spool according to Claim 2, characterised in that the clamping plate (7) is provided, on the side opposite the hinges or bending rods (8) with a plurality of retaining pins (8) which are movable in corresponding grooves (9) formed in the slot (5).

4. Film spool according to Claim 1, characterised in that the clamping plate (7) is rotatable about the axis of the spool (1) and has a retaining pin (8) and a clamping edge (11') on each of its free longitudinal edges, the retaining pins (8) being movable in grooves (9) formed in the two side walls of the slot (5) and the clamping edges (11') of the clamping plate (7), when in the clamping position, being parallel to the clamping surfaces (11) of the aide walls of the slot.

5. Film spool according to Claim 1, characterised in that the clamping plate (7) has a plurality of retaining pins (8) on each of its free longitudinal edges, which pins are movable in corresponding grooves (9) formed in the slots (5).

6. Film spool according to Claim 4, characterised in that torsion rods (12), which are prolonged towards the centre of the spool and are fastened inside the clamping plate (7), are provided for the rotatable mounting of the clamping plate (7) about a longitudinal axis of the spool.

7. Film spool according to one of the above Claims, characterised in that the angle α is 5° to 45°, preferably 10° to 25°.

8. Film spool according to one of the above Claims, characterised in that the film spool (1) is provided, on a section positioned outside the cartridge, with at least one mark (13) which indicates the position of the threading-in slot (5).

**Revendications**

1. Bobine de pellicule munie d'un tenon de retenue pour la fixation d'une extrémité perforée de pellicule dans une fente du noyau de la bobine, caractérisée par le fait que dans la fente (5) du noyau (2) de la bobine une plaque de blocage (7) est disposée parallèlement à l'axe longitudinal de la bobiné sous un angle α > O par rapport à la normale aux parois latérales de la fente parallèles à l'axe et peut pivoter autour d'un axe parallèle à l'axe longitudinal de la bobine, et cette plaque de blocage (7), en vue de l'accrochage de l'extrémité perforée (4) de la pellicule à son arête longitudinale libre (11'), est munie d'au moins un tenon de retenue (8) qui peut se déplacer lors du mouvement de la plaque de blocage dans une rainure (9) de la paroi latérale corréspondante de la fente (5), la plaque de blocage (7), lorsque se produit un effort de traction, tournant alors dans une position dans laquelle son arête longitudinale libre (11') bloque la partie non perforée de l'éxtrémité de la pellicule contre la paroi latérale de la fente.

2. Bobine de pellicule selon la revendication 1, caractérisée par le fait que la plaque de blocage (7) est fixée par au moins deux charnières ou joints articulés (6) à l'une des faces parallèles à l'axe de la bobine (1) ou à l'une des parois latérales de la fente (5) et possède sur le côté opposé aux charnières ou joints articulés (6) le tenon de retenue (8) et l'arête longitudinale libre (11'), de manière que, dans la position de blocage, l'arête longitudinale (11') soit parallèle à la face (11) de la paroi latérale de la fente (5) qui assure le blocage.

3. Bobine de pellicule selon la revendication 2, caractérisée par le fait que la plaque de blocage (7) est munie, sur le côté opposé aux charnières ou joints articulés (6) de plusieurs tenons de retenue (8), qui peuvent se déplacer dans des rainures correspondantes (9) creusées dans la fente (5).

4. Bobine de pellicule selon la revendication 1, caractérisée par le fait que la plaque de blocage (7) peut pivoter autour de l'axe de la bobine (1) et possède sur chacune de ses arêtes longitudinales libres un tenon de retenue (8) et une arête de blocage (11'), les tenons de retenue (8) pouvant ainsi se déplacer dans les rainures (9) creusées dans les deux parois latérales de la fente (5) et, en position de blocage, les arêtes de blocage (11') de la plaque de blocage (7) étant parallèles aux faces (77) des parois latérales de la fente qui assurent le blocage.

5. Bobine de pellicule selon la revendication 4, caractérisée par le fait que la plaque de blocage (7) possède sur chacune de ses arêtes longitudinales plusieurs tenons de retenue (8) qui peuvent se déplacer dans des rainures (9) correspondantes creusées dans la fente (5).

6. Bobine de pellicule selon la revendication 4, caractérisée par le fait que pour le pivotement de la plaque de blocage (7) autour d'un axe longitudinal de la pellicule sont prévues des barres de torsion (12) qui s'étendent vers le milieu de la bobine et sont fixées à l'intérieur de la plaque de blocage (7).

7. Bobine de pellicule selon l'une des revendications précédentes, caractérisée par le fait que l'angle α varie de 5° à 45°, de préférence de 10° à 25°.

8. Bobine de pellicule selon l'une des revendications précédentes, caractérisée par le fait que la bobine de pellicule (1) est munie à l'une des parties situées à l'extérieur du chargeur d'au moins un repère (13) qui indique la position de la fente (5) d'émbobinage.

0 065 250

FIG. 1

FIG. 2

FIG. 3

FIG. 4

1

FIG. 5

F IG. 6

FIG. 7